(19) Europäisches Patentamt

European Patent Office

Office européen des brevets

(11) EP 0 848 436 A2

(12) EUROPEAN PATENT APPLICATION

(43) Date of publication:
17.06.1998 Bulletin 1998/25

(51) Int. Cl.$^6$: H01M 2/16, H01M 10/34

(21) Application number: 97117952.8

(22) Date of filing: 16.10.1997

(84) Designated Contracting States:
AT BE CH DE DK ES FI FR GB GR IE IT LI LU MC NL PT SE

(30) Priority: 13.12.1996 JP 333302/96

(71) Applicant:
MATSUSHITA ELECTRIC INDUSTRIAL CO., LTD.
Kadoma-shi, Osaka-fu, 571 (JP)

(72) Inventors:
• Gomikawa, Kaori
Tsujido, Fujisawa City, 251 (JP)

• Yokoo, Sadaaki
Yokohama City, 244 (JP)
• Yuasa, Kohji
Chigasaki City, 253 (JP)

(74) Representative:
Jung, Elisabeth, Dr. et al
Patentanwälte,
Dr. Elisabeth Jung,
Dr. Jürgen Schirdewahn,
Claus Gernhardt,
Postfach 40 14 68
80714 München (DE)

(54) Separator material for alkaline storage batteries

(57) A separator material for alkaline storage batteries is disclosed. It has appropriate gas-permeability, a electrolyte absorption property and a mechanical strength and can realize alkaline storage batteries with a higher capacity density and a longer cycle life. The separator material comprises a non-woven fabric sheet of a mixture of thin polyolefin resin fibers having a filament diameter of 2 $\mu$m to 8 $\mu$m and thick polyolefin resin fibers having a filament diameter of 9 $\mu$m to 15 $\mu$m, wherein a ratio by weight of the thin resin fibers to the thick resin fibers is between 90:10 and 50:50, a basis weight of the non-woven fabric sheet is ranging from 40 g/m$^2$ to 70 g/m$^2$ and a gas-permeability is ranging from 3 cc/cm$^2$ • sec. to 14 cc/cm$^2$ • sec. The resin fibers are surface-treated to have a hydrophilic property.

FIG. 1

EP 0 848 436 A2

Description

BACKGROUND OF THE INVENTION

The present invention relates to an improvement in a separator material for alkaline storage batteries, more specifically a separator material excellent in electrolyte absorption and gas-permeability.

In general, sealed alkaline storage batteries are required to have a higher discharge capacity, a longer cycle life, and a rapid chargeability. To cope with the requirements, there have been various attempts to improve filling ability and utilization of the active material in the electrodes, as well as gas absorption capability of the negative electrode.

The capacity density and cycle life of the battery are greatly influenced by the amount of the alkaline electrolyte contained in the battery. In general, it is better that an electrolyte is contained in larger amounts from the aspects of the discharge capacity and the cycle life of battery. From the aspect of oxygen gas-absorption at the negative electrode during overcharging, however, a smaller amount of electrolyte is better in order not to deteriorate but to improve the gas-permeability of the separator. Incidentally, the amount of electrolyte is limited in a sealed battery of a given size because the electrolyte can exist only in a state of being impregnated and retained in the electrodes and the separator of a battery and cannot exist in a free state.

One factor which adversely affects the cycle life of sealed batteries is the dry out or starvation of electrolyte in the separator. This is not occurred in a battery at initial stage of charge/discharge cycles, because the separator appropriately absorbs and retains the electrolyte at this stage. However, with the progress of charge/discharge cycles, the electrodes are expanded, and the resultant expansion pressure forces the electrolyte contained in the separator to leak out from the separator. The leaking electrolyte will be absorbed by the electrodes. This is the mechanism of the electrolyte deficiency in the separator.

As a result, the electric resistance of the separator increases, which results in a decrease in the discharge voltage of the battery. The starvation of electrolyte in the separator is greatly influenced by the electrolyte absorption of the nickel positive electrode. In addition, the discharge reaction is also inhibited by the starvation of electrolyte at the separator and the discharge capacity of the battery decreases.

To make a sealed battery, on the other hand, it is required to move the oxygen gas generated from the positive electrode during overcharging of the battery to the negative electrode where the gas must be reduced. When the amount of electrolyte in the separators is increased, the gas-permeability of the separators decreases and, in some instances, the electrolyte may cover the surface of the negative electrode more densely than is necessary. As a result, three-phase interface for reduction of the gas decreases, and the oxygen gas reduction by the negative electrode is reduced accordingly, which makes it difficult to make a sealed battery.

In either case, the separator material plays an important role in realizing the above-mentioned battery performances. Essential factors required for the separator material are low electric resistance, excellent alkali-resistance and oxidation resistance. In addition to these, the separator materials are also required to have preferable electrolyte absorption and appropriate gas-permeable properties and to maintain these properties for a long term. In order to provide a separator material which has an appropriate heat-resistant property and which does not decompose even in a highly concentrated alkaline electrolyte at high temperatures, there are various proposed methods for imparting the separator materials with a hydrophilic property, by, for instance, sulfonation of the surface of individual fibers of a non-woven fabric sheet comprising a polyolefine resin fiber consisting mainly of polypropylene as disclosed in Japanese Patent Publication Hei 6-101323, by graft polymerization of a polyolefin resin fiber with acrylic acid, and the like.

In either method, it is necessary for improving the electrolyte absorption property to increase the area of the fibers which are in contact with the electrolyte by enlarging the surface areas of the fibers. It is also necessary to distribute the electrolyte in the separators uniformly by shortening the intermingling distances of individual fibers. For the above-mentioned reasons, it is effective to reduce the filament diameter of individual fibers. For that the reason, there is proposed a non-woven fabric sheet comprising fibers produced by a melt-blow process which includes blowing of a molten resin through nozzles of a small diameter. Another proposed non-woven fabric sheet is produced from segmented composite fibers. The segmented composite fibers have a filament cross-section comprising a plurality of resin materials so arranged that one resin material is between the other resin materials, and are spun so as to be longitudinally divided into a plurality of ultra-thin individual fibers by a fluid stream or the like.

The non-woven fabric sheet comprising polyolefin resin fibers, such as polypropylene or the like, produced by the conventional melt-blow process has a problem of unsatisfactory tensile strength of the individual fibers, which causes the problem of lacking a mechanical strength as a separator material which is necessary during the battery production process.

Incidentally, another non-woven fabric sheet comprises the segmented composite fibers which have been processed into a state of non-woven fabric in a dry or wet process whereby the individual fibers are entangled with each other. The non-woven fabric sheet thus configured has a greater tensile strength than the fabric produced by the melt-blow process and can solve the problem encountered with one produced by the melt-blow process, because the individual fibers have been drawn at the stage of spinning. However, since the individual fibers are essentially thin, the non-woven fabric sheet produced by this process is insufficient in mechanical strength and thus lacks the so-called "nerve". This leads to a problem of lacking the mechanical strength as a separator material which is necessary at the time of rolling it up with the electrodes in a spiral fashion during the battery production process.

In addition, if the filament diameter of the individual fibers is made small, mesh of the non-woven fabric sheet produced with the fibers is often dense. This may lower the gas-permeability of a separator material. For that reason, it is necessary to controle, in compliance with the battery inner pressure, the gas-permeability and the electrolyte absorption property which contradicts the gas-permeability.

## BRIEF SUMMARY OF THE INVENTION

It is therefore the primary object of the present invention to solve the above-mentioned problems inherent to the prior art and to provide a separator material for alkaline storage batteries which has an appropriate electrolyte absorption property, gas-permeability and a sufficient physical strength.

Another object of the present invention is to provide a separator material which gives such batteries that do not raise their inner pressure and have a long cycle life, when applied to an alkaline storage battery of high capacity density.

The present invention provides a separator material for alkaline storage batteries comprising a non-woven fabric sheet of a mixture of thin polyolefin resin fibers having a filament diameter ranging from 2 $\mu$m to 8 $\mu$m with thick polyolefin resin fibers having a filament diameter ranging from 9 $\mu$m to 15 $\mu$m, wherein a ratio by weight of the thin resin fibers to the thick resin fibers is between 90:10 and 50:50, a basis weight of the non-woven fabric sheet is ranging from 40 g/m$^2$ to 70 g/m$^2$ and a gas-permeability is ranging from 3 cc/cm$^2 \cdot$sec. to 14 cc/cm$^2 \cdot$sec., and the thin and thick resin fibers are surface-treated to have a hydrophilic property.

By employing the non-woven fabric sheet configured with the thin fibers as a main ingredient and mixing the thick fibers with the thin fibers in a preferable ratio, it is possible to provide a separator material for alkaline storage batteries having a preferable electrolyte absorption property and gas-permeability as well as a sufficient tensile strength and high stiffness, the so-called "nerve".

Processes for imparting the surfaces of the individual resin fibers with the hydrophilic property are preferably performed by graft polymerization with acrylic acid or by sulfonation.

Qualitative requirement of the thick resin fibers to be mixed with the thin resin fibers may be any of polyolefin resin containing ethylene component, and can arbitrarily selected from fibers consisting mainly of polypropylene and containing polyethylene, core-sheath fibers produced by coating core fibers of polypropylene with sheaths of polyethylene, and the like. In addition, as far as the non-woven fabric is comprised of these fibers as a main ingredient, small amounts of another fibers containing no ethylene component, for instance, polypropylene fibers may be mixed therewith.

By mixing the thick resin fibers with the thin resin fibers in particular, it is possible to enhance the tensile strength and the stiffness, the so-called "nerve" of the separator of the non-woven fabric sheet configured with the fibers, to facilitate its handling, and to improve the productivity of the batteries. In addition, it is also possible to control the gas-permeability and electrolyte absorption of the separator material with ease, and maintain the battery inner pressure low enough, even when the battery has a higher discharge capacity density, whereby a longer cycle life of the battery can be realized.

While the novel features of the present invention are set forth particularly in the appended claims, the invention, both as to organization and content, will be better understood and appreciated, along with other objects and features thereof, from the following detailed description taken in conjunction with the drawings.

## BRIEF DESCRIPTION OF THE SEVERAL VIEWS OF THE DRAWING

FIG. 1 is an enlarged schematic view showing the separator material in accordance with an embodiment of the present invention which comprises a non-woven fabric sheet of the thin fibers and the thick fibers wherein the surfaces of the individual fibers are treated by graft polymerization with acrylic acid.

FIG. 2 is an enlarged schematic perspective view of the segmented composite fiber used for the separator material.

## DETAILED DESCRIPTION OF THE INVENTION

As described previously, the separator material in accordance with the present invention comprises a non-woven fabric sheet of a mixture of thin polyolefin resin fibers and thick polyolefin resin fibers in a predetermined proportion, wherein a basis weight of the non-woven fabric sheet is 40 to 70 g/m$^2$ and gas permeability is 3 to 14 cc/cm$^2 \cdot$sec. This configuration ensures not only the physical strength of the separator material, which is a requisite for the battery production process, but also the electrolyte absorption and gas-permeability properties of the separator material, which are requisites for a sealed storage battery.

Since the polyolefin resin fibers used in configuring the above-mentioned non-woven fabric sheet have an insufficient electrolyte absorption property, hydrophilic groups are introduced onto the surfaces of the individual fibers in accordance with the present invention. It is preferable to introduce the hydrophilic groups onto the surfaces of the individual fibers by graft polymerization with a hydrophilic monomer having a carboxyl group. This imparts the separator material with a long-term hydrophilic property.

In accordance with the present invention, the separator material is imparted with the long-term hydrophilic property by graft polymerization of the surfaces of the polyolefin resin fibers which have an insufficient hydrophilic property with acrylic acid, or by sulfonation of the parts of the fibers having ethylene component by immersing the fibers in fuming sulfuric acid or concentrated sulfuric acid, thereby to modify the parts of ethylene component with sulfone groups.

For imparting the separator material with hydrophilic property, any other methods such as treatment with a surface active agent of the fiber surfaces, treatment by corona discharge and the like may also be used in addition to the above-mentioned treatments.

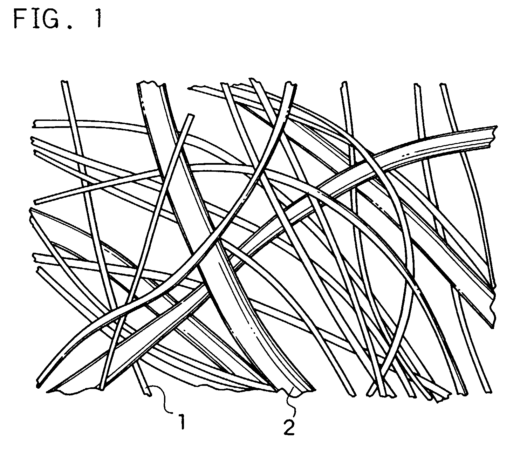

The thin resin fibers 1 which constitute the separator material shown in FIG.1 are segmented composite fibers of polypropylene and polyethylene. The thick resin fibers 2 are core-sheath fibers comprising core fibers of polypropylene and sheathes of polyethylene for covering the core polypropylene fibers. In addition to these, polypropylene fibers may be added thereto. By adding the thick fibers to the thin fibers, the "nerve" required for the non-woven fabric sheet configured with them can be strengthened. In addition, the gas-permeability of the non-woven fabric can also be increased because the pore sizes of the separator material are increased by the addition of the thick fibers.

By employing the separator material in accordance with the present invention, it is possible to provide a sealed alkaline storage battery having a long cycle life, the inner pressure of which does not rise for a long term.

In the following paragraphs, preferred embodiments of the present invention will be described.

In the embodiments, a description will be made on the separator material by taking, as its specific examples, a nickel-metal hydride storage battery configured with the separator material comprising the non-woven fabric sheet of polypropylene resin fibers whose surfaces are treated by graft polymerization with acrylic acid.

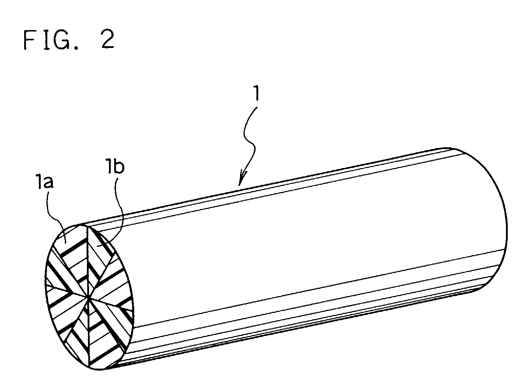

Such non-woven fabric sheet of polypropylene resin fibers is produced in compliance with the following procedures. First, segmented composite fibers each having a cross-section where polyethylene components and polypropylene components are alternately arranged as shown in FIG. 2 are prepared. The segmented composite fibers are divided into four polypropylene fibers 1a and four polyethylene fibers 1b by the subsequent segmentation treatment. Nominal filament diameters of the individual fibers 1a and 1b are 4.7 $\mu$m.

As the thick resin fibers, core-sheath fibers which comprise cores of polypropylene resin and sheathes of polyethylene resin covering the cores add which have nominal filament diameters of 9 $\mu$m are also prepared. In this description, the nominal filament diameters of the individual fibers 1a and 1b having a non-circular cross-section are defined to represent the larger diameters of the cross-sections.

A primary non-woven fabric sheet is produced by dispersing the thick fibers and the segmented composite fibers in an aqueous dispersing medium containing no binding agent, and scooping up the dispersed fibers with a wire cloth from the dispersion. Subsequently, the primary non-woven fabric sheet is treated in a water stream to separate the segmented composite fibers and intermingle the individual fibers with each other. This produces a secondary non-woven fabric sheet. In this manner, the non-woven fabric sheet which has a basis weight and a thickness of 55 g/m$^2$ and 180 $\mu$m, respectively, is obtained. In this example, the proportion by weight of the above-mentioned thin fibers to the thick fibers is adjusted to 80:20.

Separate from this, a solution comprising 20 wt% of acrylic acid, 65 wt% of distilled water, 0.5 wt% of benzophenone, 0.3 wt% of Mohr's salt, 13.7 wt% of methoxyethanol and 0.5 wt% of nonionic surface active agent is prepared. In this solution, the above-mentioned non-woven fabric sheet is immersed for 10 minutes. In order to exclude the influence of oxygen during the subsequent polymerization as much as possible, this solution has previously been de-oxidized with nitrogen prior to the immersion.

After removing the excessive solution, the immersed non-woven fabric sheet is subjected to the graft polymerization with acrylic acid by irradiating both surfaces of the non-woven fabric sheet with ultraviolet ray under a de-oxidized atmosphere using two low-pressure mercury lamps (output: 110 watt), each placed at a 5 cm distance from the surfaces of the non-woven fabric sheet.

Subsequently, the unreacted acrylic acid and other components remaining on the non-woven fabric sheet are removed by washing it with distilled water at 60 °C. Subsequent drying and calendering of the fabric sheet produces a separator material having a basis weight of 60 g/m$^2$ and a thickness of 120 $\mu$m. In the non-woven fabric sheet consisting mainly of polypropylene resin fibers subjected to the graft polymerization with acrylic acid, the modification amount by the hydrophilic monomer is defined by a graft ratio calculated from the following equation (1) on the basis of the weight ($W_0$) of the separator material before the graft polymerization and the weight ($W_1$) after the graft polymerization,

$$\text{Modification amount} = 100 \times (W_1 - W_0)/W_0 \tag{1}$$

Based on the above equation, the calculated modification amount (graft ratio) of the above-mentioned separator material is 9 %.

Evaluation of the strength in "nerve" of the separator material is made by measuring its stiffness representing the bending repulsion on a Gurley-type tester in compliance with a method stipulated in 6.20. 1. A of JIS L1096-1979.

Evaluation of the gas-permeability of the separator material is made by measuring its gas-permeability at a pressure difference of 12.7 mm aq. on a Frazir type gas-permeation tester in compliance with a method stipulated in 6.27. 1. A of JIS L1096-1979.

The electrolyte absorption property of the separator material is evaluated by measuring its electrolyte absorption ratio under pressure. That of the polypropylene non-woven fabric sheet subjected to the graft polymerization with acrylic acid is evaluated in the following procedures.

First, a test piece is prepared by cutting the above-mentioned polypropylene non-woven fabric sheet to a 3-cm-size circle. After the weight ($W_a$) is measured, the test piece is immersed in an aqueous solution of KOH having a specific gravity of 1.30 for 3 hours or more. Subsequently, the excess electrolyte adhering to the surfaces of the test piece is removed and then the test piece is inserted into a folded filter paper. The test piece is applied with a pressure of 60 kg/cm$^2$ for 30 seconds. Then, the weight ($W_b$) of the pressed test piece is measured. The electrolyte absorption ratio under pressure is calculated from the following equation (2).

$$\text{Electrolyte absorption ratio} = 100 \times (W_a - W_b)/W_a \qquad (2)$$

Based on the above definitions, the stiffness representing the strength of "nerve", the gas-permeability and the electrolyte absorption ratio under pressure of the above-mentioned separator material are found to be 5.0 mg, 45 cc/cm$^2 \cdot$ sec. and 25 %, respectively.

EXAMPLES 1 - 6, COMPARATIVE EXAMPLES 1 - 3

By varying the mixing ratio of the thin resin fibers with the thick resin fibers, the filament diameters of the individual fibers and the qualities of the resin fibers, nine (9) samples of non-woven fabric sheets "a" - "i" as listed in Table 1 below, comprising polypropylene resin fibers subjected to the graft polymerization with acrylic acid, were prepared. These fabric samples included, as their thin fibers, the previously-described segmented composite fibers of polyethylene and polypropylene. The samples of Examples 1 through 5 and of Comparative example 3 included the core-sheath fibers comprising cores of polypropylene and sheathes of polyethylene as the thick fibers. For the sample of Example 6, polypropylene fibers were used. In all the separator materials, the graft ratio (modification ratio) was adjusted to 9%. The characteristics of these separator materials are also listed in Table 1 below.

Table 1

| | Separator | Thin fiber/Thick fiber | Mixing ratio | Stiffness | Gas-permeation rate | Electrolyte absorption ratio |
|---|---|---|---|---|---|---|
| Example 1 | a | 4.7μm 9μm | 80:20 | 5.0 | 4.5 | 25% |
| Example 2 | b | 4.7μm 15μm | 50:50 | 8.0 | 14.0 | 18% |
| Example 3 | c | 4.7μm 9μm | 30:70 | 11.0 | 16.0 | 10% |
| Example 4 | d | 4.7μm 9μm | 10:90 | 13.0 | 18.0 | 8% |
| Example 5 | e | 3.6μm 9μm | 50:50 | 6.0 | 5.0 | 20% |
| Example 6 | f | 4.7μm 15μm | 90:10 | 4.0 | 3.0 | 28% |
| Comparative example 1 | g | 4.7μm --- | 100:0 | 1.0 | 1.5 | 40% |
| Comparative example 2 | h | 3.6μm --- | 100:0 | 0.8 | 1.0 | 45% |
| Comparative example 3 | i | ---9μm | 0:100 | 18.0 | 20.0 | 5% |

When the ratio of the thin fibers with a filament diameter of 4.7 μm, which are segmented into polyethylene fibers and polypropylene fibers, to the thick fibers with a filament diameter of 9 μm, which are core-sheath fibers comprising core polypropylene fibers and polyethylene sheaths, was varied from "a" to "d" as listed in Table 1, the stiffness of the non-woven fabric was enhanced as the ratio of thick fibers increased. This is because the amount of fibers with strong "nerve" was increased in the fabric. The gas-permeation rate also increased as the ratio of thick fibers increased. This is because the pore size became larger as the ratio of thick fibers increased. On the other hand, as the ratio of thick fibers increased, there were decreases in the total surface area of the fibers and the electrolyte absorption of the separator.

When the filament diameter of the thin fibers was adjusted to 3.6 $\mu$m, substantially the same levels of the stiffness, the gas-permeation rate and the electrolyte absorption ratio under presue as those of the separator "a" were obtained at a mixing ratio of the thin fibers to the thick fibers of 50:50 (separator "e"), where the proportion of the thick fibers was larger than that of the separator "a" comprising the thin fibers of the filament diameter of 4.7 $\mu$m.

When the filament diameter of the thick fibers was adjusted to 15 $\mu$m, substantially the same levels of the stiffness, the gas-permeation rate and the electrolyte absorption ratio under pressure as those of the separator "a" were obtained, at a ratio of 10 % (separator "f") of the thin fibers having the filament diameter of 4.7 $\mu$m which was smaller than that of the separator "a" comprising the thick fibers having the filament diameter of 9 $\mu$m.

Since the separator "g" or "h" comprising only the thin fibers having the filament diameter of 4.7 $\mu$m or 3.6 $\mu$m lacked any fibers which were strong in "nerve", the stiffness was extremely low. In addition, the gas-permeation rate decreased with the smaller pore sizes. On the other hand, there was a tendency of very high electrolyte absorption because of large surface area.

The separator "i" comprising only the thick fibers had high stiffness because of its strong "nerve", and the gas-permeation rate was large because the pore sizes became large. The smaller the surface area of the fibers, the larger the decrease in the electrolyte absorption.

Next, sealed alkaline storage batteries were produced by using the above-mentioned separators "a" to "i" in the following procedure.

First, 100 parts by weight of nickel hydroxide powder as an active material was kneaded with 6 parts by weight of cobalt hydroxide and water to prepare a paste which was then filled into a foamed nickel porous substrate, and subsequently dried and pressed. The pressed substrate was immersed in an aqueous dispersion of fluorocarbon resin, dried, and cut to a predetermined size, which gave a positive electrode.

For a negative electrode, a hydrogen storage alloy having a composition represented by the formula $MmNi_{3.55}Mn_{0.4}Al_{0.3}Co_{0.75}$ (Mm is a mixture of rare earth elements) having a crystal structure of $CaCu_5$ type was used. This alloy was pulverized in a ball mill into fine powders having an average particle diameter of about 30 $\mu$m which were then immersed in an aqueous solution of KOH at 80 °C and washed with water. A paste was obtained by mixing this hydrogen storage alloy powder with an aqueous dispersion of stylene-butadiene rubber, carboxymethyl cellulose, carbon powder and water, and the obtained paste was applied onto a punched steel sheet elated with nickel. After dried, the applied punched steel sheet was pressed and cut to a predetermined size. This gave a negative electrode.

Subsequently, a combination of the above-mentioned positive electrode, one of the separators "a" to "i" listed in Table 1, which had been subjected to the graft polymerization with acrylic acid and had a sufficient length twice the length of the positive electrode plus 40 mm, for covering both the front and rear surfaces of the positive electrode, and the negative electrode, which had the length of the positive electrode plus 35 mm and a theoretical capacity as large as 1.3 to 1.4 times the theoretical capacity of the positive electrode, was rolled up in a spiral fashion, and configured in an electrode group, which was then inserted in a battery case. After injecting an appropriate amount of electrolyte comprising an aqueous solution composed mainly of KOH and containing a small amount of NaOH and LiOH into the battery case, the battery case was sealed with a sealing plate and a gasket, thereby to obtain a sealed battery having a discharge capacity of 1,800 mAh.

After three (3) preliminary charge/discharge cycles, the batteries A to I configured with the separator materials "a" to "i" listed in Table 1 at an ambient temperature of 20 °C were subjected to an inner pressure test and a cycle life test.

Conditions for the inner pressure test included charging at a current of 1.8 A at an ambient temperature of 20 °C for 72 minutes.

Conditions for the cycle life test included repeated charging at a current of 1.8 A for 72 minutes and discharging at a current of 1.8 A until the terminal voltage dropped to 1.0 V at an ambient temperature of 20 °C, and the cycle life of the tested battery was determined by the number of cycles up to the time point when the discharge capacity decreased to 60% of the initial discharge capacity.

In addition, by configuring the spirally rolled-up electrode groups with the separator materials of these nine (9) kinds on the mass production facilities, adaptabilities of the separator materials to mass production were investigated.

Evaluation on the adaptability was made by detecting a leakage-associated defective ratio defined by the following equation (3), resulting from rolling-up shift between the electrode plates and the separator material during the electrode group configuration process.

Leakage-associated defective ratio = 100 × (Number of leakage defective cells)/(Number of total cells)     (3)

If the stiffness of the separator material is low, the separator material may sometimes be transferred while it is shifted aside during the process of transferring from the start of rolling-up to the electrode group configuration step in combining the electrode plates with the separator material in the electrode group configuring unit. Consequently, in the spirally rolled-up electrode group, the axial positions of the electrode plates may sometimes shift from that of the separator, and the electrode plates project over the separator. This causes the increase of the leakage-associated defective.

Table 2 summarizes the results of the leakage-associated defective ratio during the electrode group configuration by mass production, the battery inner pressures and the cycle lives of the respective batteries A to I.

Table 2

| | Battery | Leakage defective resulting from the rolling-up shift during the electrode group configuration (%) | Battery inner pressure $(kg/cm^2)$ | Cycle life (cycles) |
|---|---|---|---|---|
| Example 1 | A | 0% | 5.5 | 420 |
| Example 2 | B | 0% | 4.0 | 380 |
| Example 3 | C | 0% | 3.8 | 290 |
| Example 4 | D | 0% | 3.5 | 270 |
| Example 5 | E | 0% | 5.8 | 400 |
| Example 6 | F | 0% | 7.5 | 430 |
| Comparative example 1 | G | 20% | 12.0 | 250 |
| Comparative example 2 | H | 30% | 15.0 | 230 |
| Comparative example 3 | I | 0% | 3.0 | 200 |

As clearly seen from Table 2, the separator materials "a" to "f" of Working examples 1 to 6 were excellent in the adaptability to the mass production as compared with that of the separator materials of Comparative examples 1 and 2.

In addition, since the batteries A to F had a higher electrolyte absorption property as compared with that of the battery I, they were excellent in cycle life characteristics. Although the batteries G and H were excellent in electrolyte absorption property, their cycle life characteristics were low because their inner pressure characteristics were inferior. Since the batteries A, B, E and F, in particular, were excellent in both gas-permeability and electrolyte absorption property, they demonstrated a small increase in inner pressure and had cycle life characteristics of not less than 300 cycles. These confirmed that they had no problem in practical use.

It is desirable that the separator material has a basis weight of 40 $g/m^2$ to 70 $g/m^2$ and a thickness of 50 $\mu m$ to 180 $\mu m$. If the basis weight is smaller than 40 $g/m^2$, it is difficult to secure necessary stiffness, even if the mixing ratio of the thick fibers is large. In contrast, if the basis weight is larger than 70 $g/m^2$, or if the thickness is not more than 50 $\mu m$, it is difficult to secure appropriate gas-permeability. In addition, if the thickness is not less than 180 $\mu m$, it is difficult to realize a higher capacity density of the battery because space occupied by the separator increases with the thicker separator material.

In the foregoing embodiments, although the wet process was taken as an example for preparing the non-woven fabric sheet, a similar technical advantage is obtained with a dry process.

In addition, evaluations on the separator materials prepared by varying the graft polymerization ratio stepwisely 1%, 5%, 10%, 15% and 20% were also made, by changing the concentration of the solution used in the graft polymerization, which revealed a similar technical advantage at any graft polymerization ratio of 2% to 15%. At the graft polymerization ratio of 1%, only an inferior cycle life characteristic was obtained because of insufficient electrolyte absorption property, At another graft polymerization ratio of 20%, an inferior cycle life characteristic was also obtained, of which reason was unknown.

Such a tendency as appreciated in the treatment for imparting hydrophilic property by the graft polymerization with acrylic acid is not limited to the graft polymerization and also appreciated in the treatment by sulfonation, by corona discharge or with a surface active agent.

The treatment by sulfonation is performed under the following conditions. The non-woven fabric sheet is immersed in 20% fuming sulfuric acid at 35 °C for about 20 minutes, followed by washing with water and drying.

From the results of evaluations conducted on the separator materials prepared by varying the amount of the introduced sulfone groups stepwisely 0.03, 0.05, 1, 1.5, 2 and 2.5 milli equivalent/g, on the basis of the total amount of the resin, a similar technical advantage was obtained with the separator materials comprising the sulfone groups in an amount ranging from 0.05 milli equivalent/g to 2 milli equivalent/g. However, with the amount of 0.03 milli equivalent/g, only an insufficient electrolyte absorption property was obtained. At 2.5 milli equivalent/g, an inferior cycle life characteristic was also obtained, of which reason remained unknown. According to the investigation made by the present inventors, the amount of the sulfone groups to be introduced into the fibers is preferably in a range of 0.1 milli equivalent/g to 1 milli equivalent/g.

The treatment by corona discharge is performed under the following conditions. An electrode which has a width of 20 mm and a length of 600 mm and is connected to a high voltage power source with an output of 30 kV, and a counter electrode of the same size which has a layer coated with a dielectric substance are installed with a gap of 3.2 mm therebetween, through which the belt-like non-woven fabric sheet can travel. While the non-woven fabric sheet is transferred through the gap, a corona discharge is effected between both electrodes so that the total energy irradiated on one face of the non-woven fabric is 17.5 kW/m$^2$, thereby to treat the surfaces of the fibers of the non-woven fabric sheet with the ozone generated during the discharge. From the results of the evaluation of the separator material thus treated, a similar technical advantage to that of the above-mentioned separator was obtained.

Treatment with surface active agent was performed as follows:

The above-mentioned non-woven fabric sheet was immersed in an aqueous solution containing a nonionic surface active agent and dried to prepare a non-woven fabric sheet of which surfaces are applied with the surface active agent of 0.1 wt% of the separator.

Then, the separator material thus treated was evaluated and a similar effect to that of the above-mentioned separator could be obtained

Although the foregoing description is limited to the nickel-metal hydride storage battery, the separator material in accordance with the present invention can also be used in any other alkaline storage batteries comprising any of the nickel hydroxide positive electrode or the hydrogen storage alloy negative electrode, such as nickel-zinc storage batteries, manganese dioxide-metal hydride storage batteries and the like, with a similar technical advantage.

It is understood that various other modifications will be apparent to and can be readily made by those skilled in the art without departing from the scope and spirit of the present invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A separator material for alkaline storage batteries comprising a non-woven fabric sheet of a mixture of thin polyolefin resin fibers having a filament diameter ranging from 2 $\mu$m to 8 $\mu$m and thick polyolefin resin fibers having a filament diameter ranging from 9 $\mu$m to 15 $\mu$m, wherein a ratio by weight of said thin resin fibers to said thick resin fibers is 90:10 and 50:50, a basis weight of said non-woven fabric sheet is ranging from 40 g/m$^2$ to 70 g/m$^2$ and a gas-permeability is ranging from 3 cc/cm$^2$ • sec. to 14 cc/cm$^2$ • sec., said thin and thick resin fibers being surface-treated to have a hydrophilic property.

2. The separator material for alkaline storage batteries in accordance with claim 1, wherein said thick resin fibers are at least one selected from the group consisting of fibers mainly of polypropylene and further containing polyethylene, core-sheath fibers comprising core fibers of polypropylene and sheaths of polyethylene, and a mixture of these with a small amount of polypropylene fibers incorporated.

3. The separator material for alkaline storage batteries in accordance with claim 1, wherein a hydrophilic monomer having a carboxyl group is bonded to the surfaces of said thin and thick fibers by graft polymerization.

4. The separator material for alkaline storage batteries in accordance with claim 3, wherein a ratio of the graft polymerization of said hydrophilic monomer having a carboxyl group is between 2% and 15% of the total weight of the separator resin fibers.

5. The separator material for alkaline storage batteries in accordance with claim 3, wherein said hydrophilic monomer having a carboxyl group is acrylic acid.

6. The separator material for alkaline storage batteries in accordance with claim 1, wherein the surfaces of said thin and thick resin fibers are treated by corona discharge.

7. The separator material for alkaline storage batteries in accordance with claim 1, wherein the surfaces of said thin and thick resin fibers are treated with a surface active agent.

8. A separator material for alkaline storage batteries comprising a non-woven fabric sheet of a mixture of thin fibers having a filament diameter of 2 $\mu$m to 8 $\mu$m of a polyolefin resin containing ethylene components and thick fibers having a filament diameter of 9 $\mu$m to 15 $\mu$m of a polyolefin resin containing ethylene components, wherein a ratio by weight of said thin fibers to said thick fibers is between 90:10 and 50:50, a basis weight as a non-woven fabric sheet is ranging from 40 g/m$^2$ to 70 g/m$^2$ and a gas-permeability is ranging from 3 cc/cm$^2$ • sec. to 14 cc/cm$^2$ • sec., the surfaces of said thin and thick fibers being subjected to sulfonation.

9. The separator material for alkaline storage batteries in accordance with claim 8, wherein said thick resin fibers are at least one selected from the group consisting of fibers mainly of polypropylene and further containing polyethylene, core-sheath fibers comprising core fibers of polypropylene and sheathes of polyethylene, and a mixture of these with a small amount of polypropylene fibers incorporated.

10. The separator material for alkaline storage batteries in accordance with claim 8, wherein the amount of the sulfone groups introduced onto the fibers by the sulfonation is ranging from 0.05 milli equivalent/g to 2 milli equivalent/g, on the basis of total weight of the separator resin fibers.

11. The separator material for alkaline storage batteries in accordance with claim 9, wherein the amount of the sulfone groups introduced onto the resin fibers by sulfonation is ranging from 0.1 milli equivalent/g to 1 milli equivalent/g.

FIG. 1

FIG. 2